# EUROPÄISCHE PATENTSCHRIFT

(11) **EP 3 782 240 B1**
(45) Veröffentlichungstag und Bekanntmachung des Hinweises auf die Patenterteilung: **10.12.2025**
(21) Anmeldenummer: 19720035.5
(22) Anmeldetag: 08.04.2019
(51) Int. Cl.: H01H 9/54, H01R 13/703, H01R 13/70, H01H 9/30, H01R 13/629

(54) **VORRICHTUNG UND VERFAHREN ZUM LASTFREIEN TRENNEN EINER STECKVERBINDUNG**
DEVICE AND METHOD FOR THE LOAD-FREE DISCONNECTION OF A PLUG-IN CONNECTION
DISPOSITIF ET PROCÉDÉ DE DÉCONNEXION SANS CHARGE D'UNE CONNEXION ENFICHABLE

(30) Priorität: 20.04.2018 DE 102018109530
(43) Veröffentlichungstag der Anmeldung: 24.02.2021
(73) Patentinhaber: HARTING Electric Stiftung & Co. KG, 32339 Espelkamp (DE)
(72) Erfinder: KROPIEWNICKI, Norbert, 33739 Bielefeld (DE)
(86) Internationale Anmeldenummer: PCT/DE2019/100320
(87) Internationale Veröffentlichungsnummer: WO 2019/201383

(56) Entgegenhaltungen:
- US-A1- 2002 173 186
- US-A1- 2005 014 407
- US-A1- 2005 098 419
- US-B1- 9 478 900
- US-B2- 9 028 267

## Beschreibung

Die Erfindung geht aus von einer Vorrichtung zum lastfreien Trennen einer Steckverbindung nach dem Oberbegriff des unabhängigen Anspruchs 1.

Die Erfindung geht weiterhin aus von einem Verfahren zum lastfreien Trennen einer Steckverbindung nach der Gattung des unabhängigen Verfahrensanspruchs 5.

Derartige Vorrichtungen und Verfahren werden zum lastfreien Trennen einer Steckverbindung benötigt, d. h. sie werden benötigt, um ein Trennen der Steckverbindung unter Last zuverlässig zu vermeiden.

Der Begriff "Trennen unter Last" bedeutet dabei Folgendes:
Bis zum Zeitpunkt der Trennung fließt ein Laststrom über zumindest ein Kontaktpaar. Das Kontaktpaar besteht aus zwei Kontakten, nämlich einem Kontakt, der üblicherweise zu einem Steckverbinder gehört, und einem Gegenkontakt, welche üblicherweise zu einem Gegenstechverbinder gehört. Diese beiden Kontakte sind bis zum Zeitpunkt der Trennung mechanisch und elektrisch leitend miteinander verbunden, so dass der Laststrom bis zur Trennung über das Kontaktpaar fließen kann. Dabei sind der Steckverbinder und der Gegensteckverbinder üblicherweise miteinander gesteckt, d. h. die Steckverbindung ist geschlossen.

Ab dem Zeitpunkt der Trennung liegt eine Lastspannung in Form einer entsprechenden elektrischen Potentialdifferenz, zwischen dem Kontakt und dem Gegenkontakt an. Als Folge können bei dem Trennvorgang Überschläge und/oder Funken auftreten, die das Kontaktmaterial auf der Oberfläche der Kontakte beschädigen oder zumindest dessen Leitverhalten verschlechtern.

Somit bedeutet die Formulierung, "...lastfreies Trennen...", dass ein Trennen unter Last vermieden wird, also, dass der Trennvorgang stattfindet, ohne dass bis zum Zeitpunkt des Trennvorgangs ein solcher Laststrom über das jeweilige Kontaktpaar fließt. Dadurch wird schließlich vermieden, dass es in der Folge beim Trennen zu Überschlägen, Funken, Beschädigungen, etc. kommen kann.

Die Lastspannung, die im getrennten Zustand zwischen dem Kontakt und dem Gegenkontakt anliegt, entspricht üblicherweise einer sogenannten "Versorgungsspannung", die üblicherweise an dem zumindest einen Kontakt des Gegensteckverbinders anliegt. im Der Begriff "Versorgungsspannung" bezeichnet dabei und im Folgenden eine elektrische Spannung, die zusammen mit einem entsprechenden Versorgungsstrom im Betrieb zur Übertragung elektrischer Energie vorgesehen ist. Die Versorgungsspannung beträgt im Gegensatz zu einer vergleichsweise niedrigeren Signalspannung mindestens 60 V ("Volt"), insbesondere mindestens 100 V, bevorzugt mindestens 120 V, beispielsweise mindestens 200 V, z. B. mindestens 220 V, beispielswiese mindestens 230 V, insbesondere mindestens 350 V, z. B. 380 V, kann aber auch im Hochspannungsbereich liegen und dann z. B. zum Betrieb elektrischer Industrieanlagen, Eisenbahnen oder auch in Kraftwerken, etc. mindestens 1000 V (1 kV), insbesondere mindestens 2kV, beispielsweise mindestens 4 kV, also z.B. mindestens 6 kV und bevorzugt 8 kV oder gar 10 kV und mehr betragen.

### Stand der Technik

Im Stand der Technik ist beispielsweise aus der Druckschrift DE 10 2015 105 370 A1 eine Anschlussbox und ein Netzwerk zur Energieverteilung bekannt. Dabei ist einem galvanischen Trenner, beispielsweise einem Relais, ein elektronischer Schalter vorgeschaltet, um ein Trennen des galvanischen Trenners unter Last zu vermeiden. Bei einer Nottrennung, die durch eine ihr zugeordnete höhere Priorität auch bei geschlossenem elektronischen Schalter stattfindet, wird in der Anschlussbox ein Zähler inkrementiert. Dadurch können die - eigentlich grundsätzlich zu vermeidenden - Trennungen unter Last gegebenenfalls zumindest gezählt werden. Der galvanische Trenner, der durch derartige Trennungen verschleißt, kann dann nach einer bestimmten Anzahl dieser Trennungen ausgetauscht werden.

Ein Nachteil bei diesem Stand der Technik besteht darin, dass eine aufwändige Elektronik und Datentechnik notwendig ist, die für einfache Steckverbindungen in der Regel zu teuer ist. Weiterhin wird dadurch zwar ein sicheres Abschalten ermöglicht. Dadurch es ist aber dadurch noch nicht offenbart, auf welche Weise der Abschaltvorgang initiiert wird. Auch wird ein Trennen unter Last nicht in jedem Fall vermieden, sondern - bei entsprechender Priorität - trotz der Last durchgeführt und gezählt.

Die Druckschrift DE 10 2006 016 137 A1 offenbart eine Steckvorrichtung zur Kontaktierung der Hochspannungsbaugruppe eines Hybridfahrzeugs. Die Steckvorrichtung besitzt ein Gehäuse, einen innerhalb des Gehäuses vorgesehenen Steuerkontakt und innerhalb des Gehäuses vorgesehenen Hochspannungskontakt, der länger ist als der Steuerkontakt. Weiterhin offenbart die Druckschrift eine Steuervorrichtung, die bei einem Lösen der Steckvorrichtung eine Trennung des Steuerkontaktes von einem zugehörigen Gegenkontakt detektiert und bei detektierter Trennung eine Abschaltung der Hochspannung am Hochspannungsanschlusspunkt initiiert.

Nachteilig bei diesem Stand der Technik ist, dass das System eine steckseitige Steuerspannung an einem bestimmten Kontakt benötigt. Damit ist die Kompatibilität mit anderen Stecksystemen, nämlich zumindest die Belegung der Kontakte, eingeschränkt. Insbesondere ist derjenige Kontakt, welcher die Steuerspannung überträgt, im Stecksystem fest belegt und steht somit nicht der freien Verwendung zur Verfügung.

Die Druckschrift DE 10 2009 042 568 A1 offenbart ein Steckkupplungssystem zur Übertragung elektrischer Energie hoher Leistung sowie zur Übertragung eines unter Druck stehenden Fluids. Das Steckkupplungssystem besteht aus zumindest einem Kupplungsstecker und zumindest einer Kupplungsdose mit jeweils zumindest einem elektrischen Leiter. Der Kupplungsstecker ist in die Kupplungsdose zur Bildung eines gekoppelten Zustands einführbar und ist weiterhin aus der Kupplungsdose zur Bildung eines entkoppelten Zustands entfernbar. Das Steckkupplungssystem besitzt zumindest ein elektromechanisches Schutzsystem, bestehend aus zumindest einem elektronischen Schaltmittel und zumindest einem innerhalb der Kupplungsdose und/oder des Kupplungssteckers angeordnetem mechanischen Schaltmittel zur Herstellung oder Trennung der elektrisch leitenden Verbindung. Die elektronischen Schaltmittel und die mechanischen Schaltmittel sind unabhängig voneinander ansteuerbar. Weiterhin wird offenbart, dass das zumindest eine elektronische Schaltmittel durch ein Relais oder durch einen ein elektronisches Hochleistungsbauelement, vorzugsweise einen Hochleistungstransistor, aufweisenden elektronischen Schaltkreis gebildet sein kann. In einem weiteren Aspekt ist der Verriegelungsbügel durch einen Verriegelungsbolzen eines Hubmagneten arretierbar. In einer weiteren Ausgestaltung kann das zumindest eine mechanische Schaltmittel zur Herstellung oder Trennung der elektrisch leitenden Verbindung durch das Einführen des Kupplungssteckers in die Kupplungsdose oder durch das Herausnehmen des Kupplungssteckers aus der Kupplungsdose schaltbar sein.

Grundsätzlich hat sich bezüglich der letzteren Ausgestaltung jedoch gezeigt, dass ein mechanisches Schalten des elektrischen und/oder mechanischen Schaltmittels über das Trennen von Steckverbinder und Gegensteckverbinder aufgrund der mechanischen Trägheit der beteiligten mechanischen Bauteile, z. B. bei einem sehr schnellen Trennen der Steckverbindung, also z. B. einem ruckartigen Ziehen des Steckverbinders, der unter Last steht, nicht immer wirkungsvoll vor elektrischen Überschlägen und ähnlichen Effekten schützt.

Die Druckschrift DE 295 13 997 U1 offenbart eine elektrische Überwachungsvorrichtung für die Verriegelungsstellung zumindest eines Verriegelungsbügels, umfassend ein Sensorelement und ein Erregerelement, die bei gegenseitiger Annäherung in der Verriegelungsstellung des Verriegelungsbügels ein Schaltelement schließen. Insbesondere ist vorgesehen, dass in einem der beiden Gehäuse das Sensorelement zur Ansteuerung eines elektrischen Schaltelements angeordnet ist, dass in dem zumindest einen Verriegelungsbügel jeweils ein Erregerelement für das Sensorelement angeordnet ist, dass jeweils das Sensorelement und das Erregerelement so räumlich zueinander angeordnet und so sensorisch aufeinander abgestimmt sind, dass in der Verriegelungsstellung des jeweiligen Verriegelungsbügels das Geberelement so auf das Sensorelement einwirkt, dass dieses ein Ansteuersignal für das elektrische Schaltelement erzeugt und dass außerhalb der Verriegelungsstellung des jeweiligen Verriegelungsbügels das Geberelement unwirksam auf das Sensorelement einwirkt, so dass dieses kein Ansteuersignal für das elektrische Schalterelement erzeugt.

Nachteilig bei diesem Stand der Technik ist, dass der Verriegelungsbügel auch im nicht gesteckten Zustand den Sensor auslösen kann und der Laststrom auf die Steckkontakte geschaltet wird. Dies sorgt für einen vorzeitigen Verschleiß der Schalter und kann ggf. auch zu der Gefahr einer händischen Berührung spannungsführender Kontakte führen.

Das Deutsche Patent- und Markenamt hat in der Prioritätsanmeldung zu vorliegender Anmeldung den folgenden Stand der Technik recherchiert: DE 20 2016 106 664 U1 und DE 295 13 997 U1.

Die Druckschrift US 2005/0098419 A1 beschreibt eine elektrische Steckverbinderkupplung mit Schaltfunktion. Darin wird ein erstes Steckergehäuse offenbart, das einen Hebel umfasst, der zum Bewegen zwischen einer Betriebsstartposition und einer Betriebsabschlussposition vorgesehen ist, sowie ein zweites Steckergehäuse, das an das erste Steckergehäuse anpassbar ist. Das erste und das zweite Steckergehäuse stellen einzeln Stromanschlüsse bereit, die darin einen Stromschalter bilden.

### Aufgabenstellung

Die Aufgabe der Erfindung besteht darin, eine Vorrichtung und ein Verfahren anzugeben, welche ein lastfreies Trennen und ein lastfreies Verbinden einer Steckverbindung besonders zuverlässig gewährleisten.

Diese Aufgabe wird durch die Merkmale der unabhängigen Ansprüche gelöst.

Eine Vorrichtung zum lastfreien Trennen einer Steckverbindung weist zumindest eine elektrische Trennvorrichtung und eine Verriegelungsvorrichtung auf. Die Verriegelungsvorrichtung kann sowohl eine die Steckverbindung verriegelnde als auch in eine die Steckverbindung entriegelnde Stellung einnehmen. Weiterhin besitzt die Vorrichtung einen Sensor, insbesondere als Bestandteil eines Sensorsystems, der mit der Verriegelungsvorrichtung zusammenwirkt, um die elektrische Trennvorrichtung zu steuern.

Bei der Verriegelungsvorrichtung handelt es sich um einen Verriegelungsbügel, der sowohl in die besagte verriegelnde als auch in die besagte entriegelte Stellung schwenkbar ist.

Mit anderen Worten weist also die Vorrichtung zum lastfreien Trennen einer Steckverbindung zumindest die elektrische Trennvorrichtung und den Verriegelungsbügel auf, wobei der Verriegelungsbügel sowohl in eine die Steckverbindung verriegelnde, d. h. geschlossene, als auch in eine die Steckverbindung entriegelte, d. h. geöffnete, Stellung schwenkbar ist. Die Vorrichtung weist weiterhin den Sensor, insbesondere das Sensorsystem, auf, der mit dem Verriegelungsbügel, insbesondere in dessen verriegelnder Stellung zur Detektion des verriegelten Zustands der Steckverbindung, zusammenwirkt, um die elektrische Trennvorrichtung zu steuern.

Weiterhin weist die Vorrichtung einen Steckdetektor zur Feststellung eines Steckzustands der Steckverbindung auf. Der Steckdetektor und der Verriegelungssensor dazu konfiguriert, gemeinsam die elektrische Trennvorrichtung zu steuern.

Vorteilhafte Ausgestaltungen sind in den Unteransprüchen angegeben.

Die Vorrichtung ist besonders vorteilhaft, weil dadurch einerseits verhindert wird, dass in nicht gestecktem Zustand elektrische Spannung an dem Steckverbinder anliegt, was z. B. einen Berührschutz beinhaltet. Andererseits wird auch verhindert, dass durch zu schnelles Abziehen des Steckers vom Gegenstecker trotz vorheriger Abschaltung ein Lichtbogen / ein Überschlag o. ä. entsteht. Ein einzelner Steckdetektor oder ein einzelner Verriegelungssensor könnten diese beiden Aspekte der Problematik nicht lösen. Durch den Verriegelungssensor wird aber wirkungsvoll garantiert, dass ein ausreichend langer Zeitraum zwischen dem Abschalten des Laststroms und dem Ziehen des Steckers vergeht, da zwischen der Entriegelung und dem Ziehen des Steckers naturgemäß eine gewisse Zeit vergeht. Durch den Steckdetektor wird weiterhin verhindert, dass der Verriegelungsbügel im ungesteckten Zustand unbeabsichtigt den Verriegelungssensor betätigt und dadurch eine elektrische Spannung am offenen Steckverbinder anliegt. Desweiteren ist eine doppelte Absicherung gegen das unerwünschte Anliegen einer elektrischen Lastspannung/Versorgungsspannung an Steckkontakten im ungesteckten Zustand gegeben.

Dabei und im Folgenden wird der Verriegelungssensor auch verbal vereinfachend als Sensor und der Steckdetektor zuweilen auch einfach als Detektor bezeichnet. Der Steckverbinder wird zuweilen auch als Stecker bezeichnet.

Die Steckverbindung aufweist mehrere Kontaktpaare, welche aus steckverbinderseitigen Kontakten und zur Übertragung eines Versorgungsstroms/ Laststroms damit gesteckten gegensteckverbinderseitigen Gegenkontakten bestehen.

Die elektrische Trennvorrichtung besitzt eine Steuereinheit und eine Aktoreinheit. Sowohl der Steckdetektor als auch der Verriegelungssensor sind ausgangsseitig an die Steuereinheit angeschlossen. Die Steuereinheit besitzt eine logische Auswerteinheit, insbesondere mit einer boolschen, d. h. aussagelogischen "AND"-Verknüpfung der Signale des Detektors und des Sensors, die dazu dient,
- entweder das Stecksignal des Steckdetektors bei gestecktem Steckverbinder und das Verrigelungssignal des Verriegelungsdetektors bei verriegelndem Verriegelungsbügel miteinander zu verknüpfen, um die Aktoreinheit so zum Übertragen eines Laststroms zu veranlassen,
- oder aber bei nicht gestecktem Steckverbinder und/oder nicht geschlossenem Verriegelungsbügel die Aktoreinheit zum Sperren des Laststroms zu veranlassen.

Beispielsweise kann der Steckdetektor einen Schalter oder einen Magnetfeldsensor oder eine sogenannte Radio Frequency Identification Device ("RFID") oder eine Kontaktbrücke im Isolierkörper des Steckverbinders aufweisen. Der Verriegelungssensor kann einen magnetischen Sensor, einen Drucksensor, einen optische Sensor und/oder einen Taster oder Schalter besitzen.

In einer besonders vorteilhaften Ausgestaltung verhindert die Verriegelungseinrichtung in ihrer verriegelnden Stellung sowohl ein Trennen der Steckverbindung als auch ihr Verbinden, also z. B. ein Zusammenstecken von dem Steckverbinder und dem Gegensteckverbinder. Dies ist besonders vorteilhaft, weil so bereits durch den Verriegelungsdetektor nicht nur ein Trennen unter Last, sondern zusätzlich auch ein Verbinden unter Last verhindert wird. Zusätzlich wird dies vorteilhafterweise auch noch durch den Steckdetektor verhindert, so dass hier vorteilhafterweise eine doppelte Absicherung vorliegt, die in bestimmten Sicherheitslevels (z. B. SIL 3) gefordert ist. Diese erhöhte Sicherheit durch mehrere Maßnahmen gilt selbstverständlich sowohl für den Steck- als auch für den Trennvorgang sowie auch für den getrennten Zustand.

Beispielsweise kann der Verriegelungsbügel, wenn er in seine verriegelnde Stellung geschwenkt, d. h. geschlossen, ist, die Steckverbindung im gesteckten Zustand verriegeln. Im nicht gesteckten Zustand kann der geschlossene Verriegelungsbügel jedoch auch ein Stecken verhindern, d. h. der Steckverbinder ist mit dem Gegensteckverbinder bei geschlossenem Verriegelungsbügel nicht steckbar. In diesem geschlossenen Zustand kann der Verriegelungsbügel gleichzeitig derart mit dem Sensor zusammenwirken, dass in Folge eine Last (Laststrom/Lastspannung) freigegeben, also z. B. auf den besagten mindestens einen Kontakt des Gegensteckers geschaltet werden kann. Bei geschlossener Steckverbindung kann somit ein Laststrom fließen. Bei einer geöffneten Steckverbindung kann ebenfalls keine entsprechende Lastspannung an dem Kontakt anliegen, da dies durch den Steckdetektor verhindert wird. Weiterhin kann durch den geschlossenen Verriegelungsbügel der Steckverbinder sowieso nicht auf den Gegensteckverbinder gesteckt, d. h. die Steckverbindung geschlossen werden. Unter Last (Laststrom/Lastspannung) ist also aus mehreren Gründen kein Trennen und kein Stecken möglich, wodurch die Sicherheit erhöht wird.

Die Erfindung ist also von besonderem Vorteil, weil durch sie ein Trennen und gegebenenfalls auch ein Stecken der Steckverbindung unter Last besonders zuverlässig vermieden wird. Insbesondere ist die Erfindung besonders vorteilhaft für ein besonders schnelles oder ruckartiges Trennen der Steckverbindung, bestehend aus dem Steckverbinder und dem Gegensteckverbinder, z. B. dem ruckartigen Ziehen des Steckverbinders aus einer Gegensteckverbinderbuchse, welche den Gegensteckverbinder bildet oder zumindest zum Gegensteckverbinder gehört. Dabei wirkt es sich besonders vorteilhaft aus, das zwischen der Entriegelung und dem Ziehen sowie zwischen dem Stecken und der Verriegelung immer ein ausreichend großer Zeitraum vergeht.

Insbesondere ist es besonders vorteilhaft, die Sensorik, d. h. den Sensor und insbesondere auch den Detektor, räumlich in den Verriegelungsbereich zu verlegen, wobei insbesondere der Sensor und insbesondere das den Sensor aufweisende Sensorsystem mit dem Verriegelungsbügel, beispielsweise am Gegensteckverbindergehäuse, insbesondere am Anbaugehäuse, zusammenwirkt, um die elektrische Trennvorrichtung zu steuern. Schließlich ist dadurch eine ausreichende Zeitspanne zwischen der elektrischen Trennung (Abschaltung) und dem endgültigen Trennen der Steckverbindung, z. B. dem Ziehen des Steckverbinders, gegeben, denn es muss bereits vor dem Trennvorgang - z. B. dem Ziehen des Steckverbinders - die Verriegelung der Steckverbindung gelöst werden. Dadurch vergeht bis zum tatsächlichen Trennvorgang ein Zeitraum, der ausreicht, um eine etwaige mechanische Trägheit im Übertragungsweg, insbesondere die Trägheit mechanischer Schalter, auszugleichen.

Ein weiterer Vorteil der Erfindung gegenüber dem Stand der Technik besteht darin, dass das Stecksystem mit üblichen Stecksystemen insofern kompatibel ist, dass die Kontaktbelegung des Steckverbinders (und damit auch der Gegensteckverbinders) vom Benutzer frei wählbar ist, da i. d. R. kein Kontakt zur Übertragung einer Steuerspannung benötigt wird.

Lediglich, wenn der Steckdetektor mit der Kontaktbrücke im Isolierkörper des Gegensteckers zusammenwirkt, werden dadurch im Isolierkörper Kontaktplätze belegt. Bei allen anderen offenbarten Ausgestaltungen des Steckdetektors verbleiben trotz der besagten erhöhten Sicherheit sämtliche Kontakte frei und stehen der übliche Steckanwendung zur Verfügung.

Insbesondere kann der Gegensteckverbinder ein Gegensteckverbindergehäuse, insbesondere ein Anbaugehäuse, besitzen, an dem der Verriegelungsbügel schwenkbar gehalten ist, z. B. an dafür vorgesehenen Lagerzapfen. Der Steckverbinder kann ein Steckverbindergehäuse mit Rastzapfen besitzen. Dann kann der Verriegelungsbügel, wenn er in seiner die Steckverbindung verriegelnde Stellung geschwenkt ist, sich also in seinem geschlossenen Zustand befindet, die Rastzapfen des Gegensteckergehäuses verriegelnd umgreifen und das Steckverbindergehäuse mit dem Gegensteckverbindergehäuse verriegeln und idealerweise abdichtend gegen einander pressen. In diesem Fall kann auch ein Druckdetektor als mechanischer Kontaktdetektor an den Gehäusekanten vorgesehen sein.

In einer vorteilhaften Ausgestaltung kann die Vorrichtung ein Anbaugehäuse aufweisen, an welchem der Verriegelungsbügel schwenkbar gehalten ist. Dies ist besonders vorteilhaft, weil das Anbaugehäuse an einem Wanddurchbruch und/oder einem Schaltschrank und/oder einem Gerätegehäuse anbringbar ist. Dadurch ist in der Regel bereits bei der Installation klar, von welcher Steckverbindungsseite die Versorgungsspannung ausgeht, was die Installation erleichtert. Schließlich ist es besonders vorteilhaft, die mindestens eine elektrische Trennvorrichtung an derjenigen Seite der Steckverbindung anzuordnen, an der kabelseitig die Versorgungsspannung z. B. mittels einer oder mehrerer Versorgungsleitungen eines ersten Kabels, angeschlossen ist. Insbesondere kann es vorteilhaft sein, die Trennvorrichtung in dem Anbaugehäuse anzuordnen, weil dadurch die Steckverbindung eigenständig in der Lage ist, die.Last von dem Kontakt zu trennen. Insbesondere kann das Anbaugehäuse zu einem Gegenstecker gehören. Die Steckverbindung kann dann einen Steckverbinder und dem Gegenstecker aufweisen, wobei an den Steckverbinder bevorzugt ein weiteres Kabel angeschlossen sein kann, um über das im gesteckten, verriegelten und freigeschalteten Zustand die elektrische Leistung in Richtung ihres Bestimmungsorts weiterzuführen.

In einer anderen bevorzugten Ausgestaltung kann die elektrische Trennvorrichtung in dem Gerätegehäuse oder bevorzugt in dem Schaltschrank angeordnet sein, an welchem der Gegenstecker insbesondere mit seinem Anbaugehäuse angeordnet ist. Dies ist insbesondere vorteilhaft, wenn die zu von der elektrischen Trennvorrichtung zu unterbrechende elektrische Leitung, welche also dem Gegenstecker die Versorgungsspannung zuführt, in dem Gerätegehäuse oder bevorzugt dem Schaltschrank angeordnet ist.

Es versteht sich von selbst, dass die Installation vorteilhafterweise von entsprechend kompetentem Fachpersonal durchgeführt werden sollte. Bei der Installation einer elektrischen Anlage kann somit grundsätzlich die elektrische Trennvorrichtung an der versorgungsspannungsführenden Seite der Steckverbindung angeordnet werden, um eine Trennung und/oder en Stecken unter Last besonders einfach und effektiv zu verhindern.

Die elektrische Trennvorrichtung kann mit dem Sensor und dem Detektor gekoppelt sein. Insbesondere kann ein Sensorsignal in Verbindung mit dem Detektorsignal die elektrische Trennvorrichtung zur elektrischen Trennung veranlassen.

Die elektrische Trennvorrichtung kann eine Steuereinheit und eine Aktoreinheit besitzen. Wird die Aktoreinheit im Steckverbindergehäuse angeordnet, so kann sie beispielsweise auf einer Leiterkarte angeordnet sein, z. B. in Form eines Halbleiterrelais, z. B. einem Transistor, oder eines elektromechanischen Relais.

Die Steuereinheit kann vom Sensor und vom Detektor ein entsprechendes Signal erhalten, z. B. wenn der Verriegelungsbügel geschlossen ist, sich also in seinem zur Verriegelung des Steckverbinders vorgesehenen Zustand befindet und gleichzeitig der Steckverbinder mit dem Gegenstecker gesteckt ist.

Daraufhin kann die Steuereinheit ein entsprechendes Steuersignal an die Aktoreinheit schicken, welches die Aktoreinheit dazu veranlasst, zumindest einen dazugehörigen elektrischen Trenner, wie z. B. zumindest einen Schalter und/oder zumindest ein Relais und/oder zumindest einen Schütz, zu schließen, so dass das mindestens eine Kontaktpaar von dem Laststrom durchflossen werden kann.

In einer besonders vorteilhaften Ausgestaltung verhindert der Verriegelungsbügel in seiner verriegelnden Stellung nicht nur das Trennen der verbundenen Steckverbindung, sondern er verhindert umgekehrt auch ein Verbinden der getrennten Steckverbindung. Dies ist besonders vorteilhaft, weil damit nicht nur ein Trennen der Steckverbindung unter Last sondern auch ein Verbinden der Steckverbindung unter Last bereits dadurch einfach und wirkungsvoll verhindert wird. Insbesondere wird also zum einen verhindert, dass der Steckverbinder vom Gegensteckverbinder getrennt ("abgezogen") wird, während der Laststrom über das entsprechende Kontaktpaar fließt. Zum anderen wird auch verhindert, dass eine Steckverbindung hergestellt ("gesteckt") wird, während die Lastspannung zwischen dem Kontakt und dem Gegenkontakt anliegt. Zusätzlich existiert eine weitere Absicherung durch den Steckdetektor (Detektor).

Als Sensoren/Sensorsysteme können beispielsweise magnetische Sensoren, z. B. Reedsensoren; Drucksensoren, z. B. Dehnungsmessstreifen (DMS) oder piezokeramische Drucksensoren; optische Sensoren oder Taster/Endschalter eingesetzt werden. Die dafür verwendbaren Sensoren sind aber selbstverständlich nicht auf diese Aufzählung beschränkt.

Bevorzugt kann zur Feststellung des Verriegelungszustands ein Sensorsystem verwendet werden. Das Sensorsystem kann einen Magnetfeldsensor sowie einen Magneten aufweisen. Der Magnet kann an dem Verriegelungsbügel, insbesondere an einem Betätigungsbereich des Verriegelungsbügels, angeordnet sein. Der Magnetfeldsensor kann an dem Gegensteckverbindergehäuse angeordnet sein. Sobald der Verriegelungsbügel mit dem daran angebrachten Magneten, also beispielsweise mit seinem Betätigungsbereich, in die Nähe des Magnetfeldsensors gelangt, wodurch der Verriegelungsbügel also geschlossen wird, erzeugt der Magnetfeldsensor ein Sensorsignal, durch welches die Last (Lastspannung/Laststrom) freigeschaltet wird. Umgekehrt kann die Last durch die Entriegelung der Steckverbindung folgendermaßen abgeschaltet werden.

Ein Verfahren zum lastfreien Trennen einer Steckverbindung, mittels der vorgenannten Vorrichtung, weist die folgenden Schritte auf:
A.) Überführen eines Verriegelungselements in seine geschlossene Position zur Verriegelung einer geschlossenen Steckverbindung, wobei es sich bei der Verriegelungselement um einen Verriegelungsbügel (3) handelt,
B.) Zusammenwirken des Verriegelungselements (3) mit einem Verriegelungssensor (42) und gleichzeitiges Zusammenwirken der geschlossenen Steckverbindung mit einem Steckdetektor (6), wobei der Steckdetektor (6) einen Schalter oder einen Magnetfeldsensor oder eine sogenannte Radio Frequency Identification Device ("RFID") oder eine Kontaktbrücke im Isolierkörper des Steckverbinders aufweist oder als Druckdetektor ausgeführt ist;
C.) Signalisieren des gesteckten Zustands der Steckverbindung und der geschlossenen Stellung des Verriegelungselements durch den Verriegelungssensor (42) und den Steckdetektor (6) an eine Steuereinheit (51) sowie logisches Verknüpfen dieser Informationen durch die Steuereinheit (51);
D.) Freischalten einer Last (Laststrom/Lastspannung) über mehrere Kontaktpaare, welche aus steckverbinderseitigen Kontakten und zgegensteckverbinderseitigen Gegenkontakten bestehen, durch eine von der Steuereinheit gesteuerten Aktoreinheit;
E.) Entriegeln der Steckverbindung durch überführen des Verriegelungsbügels von seiner verriegelnden in seine entriegelnde Stellung; dadurch automatisch
F.) Sperren der Last durch die Aktoreinheit;
G.) lastfreies Trennen der Steckverbindung.

Wie bereits erwähnt kann es sich bei dem Verriegelungselement um den Verriegelungsbügel handeln. Bei dem Verriegelungssensor kann es sich um den Magnetfeldsensor handeln, der insbesondere Bestandteil eines Sensorsystems, insbesondere eines Magnetsensorsystems, ist. Alternativ oder ergänzend kann der Verriegelungssensor einen Drucksensor, z. B. einen Dehungsmessstreifen (DMS), einen optische Sensor und/oder einen Taster oder Schalter besitzen.

Ein Ausführungsbeispiel der Erfindung ist in den Zeichnungen dargestellt und wird im Folgenden näher erläutert. Es zeigen:
- Fig. 1: eine geschlossene Steckverbindung mit einer Vorrichtung zum lastfreien Trennen;
- Fig. 2a: die geschlossene Steckverbindung im verriegelten Zustand;
- Fig. 2b: die geschlossene Steckverbindung im entriegelten Zustand.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

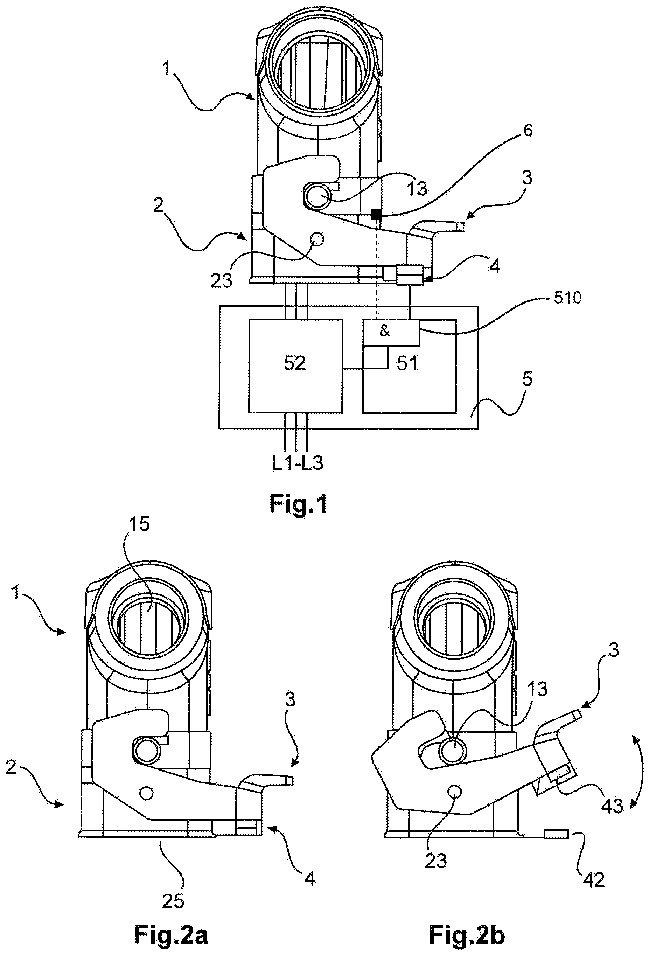

Die Fig. 1 und die Fig. 2a und 2b zeigen eine Steckverbindung, aufweisend ein Steckverbindergehäuse 1 und ein Gegensteckverbindergehäuse 2, das als Anbaugehäuse ausgeführt ist.

Das Steckverbindergehäuse 1 besitzt eine im Querschnitt rechteckige Grundform mit abgerundeten Ecken und besitzt an zwei einander gegenüberliegenden Schmalseiten je einen zylindrischen Rastzapfen 13, von denen in der Zeichnung nur einer zu sehen ist. Desweiteren besitzt das Steckverbindergehäuse einen Kabelauslass 15.

Das Gegensteckverbindergehäuse 2 besitzt ebenfalls eine im Querschnitt rechteckige Grundform mit abgerundeten Ecken und besitzt an zwei einander gegenüberliegenden Schmalseiten je einen zylindrischen Lagerzapfen 23, an welchem ein Verriegelungsbügel 3 schwenkbar gehalten ist. Zwischen dem Verriegelungsbügel 3 und einem nicht näher bezeichneten Bereich des Gegensteckverbinders 2 ist ein Sensorsystem 4 angeordnet.

Das Sensorsystem 4 besitzt einen in der Fig. 2b bezeichneten Magnetfeldsensor 42 und einen Magneten 43. Ist der Verriegelungsbügel geschlossen und befindet sich somit in seiner die Steckverbindung verriegelnden Stellung, wie es in der Fig. 1 und in der Fig. 2a dargestellt ist, so wird dies vom Sensorsystem 4 detektiert. Im vorliegenden Fall geschieht dies dadurch, dass sich der Magnet 43 in der Nähe des Magnetfeldsensors 42 befindet. Gleichzeitig umgreift der Verriegelungsbügel 3 mit seinen frei stehenden Endbereichen, von denen in der Zeichnung nur einer zu sehen ist, die Rastzapfen 13 des Steckverbindergehäuses 1. Dadurch wird nicht nur die geschlossene Steckverbindung verriegelt, sondern es werden zudem das Steckverbindergehäuse 1 und das Gegensteckverbindergehäuse 2, das im Folgenden auch als Anbaugehäuse 2 bezeichnet wird, abdichtend gegeneinandergepresst. Dabei wird automatisch ein Steckdetektor 6 betätigt, der in Form eines elektromechanischen Druckdetektors ausgeführt ist. Sowohl der Ausgang des Druckdetektors 6 als auch der Ausgang des Verriegelungssensors 4 werden einer logischen Auswerteinheit 510 einer Steuereinheit 51 einer Trennvorrichtung 5 zugeführt. Nur bei betätigtem Verriegelungssensor 4 und bei gleichzeitig betätigtem Druckdetektor 6 werden Schalter einer Aktoreinheit 52 geschlossen und es wird von der Aktoreinheit 51 ein Laststrom über die Kontakte des Gegensteckers 2 auf die Kontakte des Steckers 1 freigegeben.

Der Verriegelungsbügel 3 ist vorteilhafterweise in Form einer Wippe schwenkbar an den Lagerzapfen 23 des Anbaugehäuses 2 gehalten. Dies hat den Vorteil, dass der Sensor 4 bei geschlossenem Verriegelungsbügel 3 betätigt ist, d. h. der Magnet 43 an dem Magnetfeldsensor 42 angeordnet ist. Schließlich kann der Verriegelungsbügel 3 in dieser Bauform in seine Verriegelungsposition geschwenkt werden, indem sein rechts in der Zeichnung abgebildeter Betätigungsbereich in Richtung des Anbaugehäuses 2, also in der Zeichnung nach unten, geschwenkt wird. Gleichzeitig werden seine frei stehenden Enden nach oben über die Rastzapfen 13 des Steckverbindergehäuses 1 geschwenkt.

In der Fig. 2b ist der Verriegelungsbügel 3 in seiner geöffneten Position gezeigt. Es ist klar erkennbar, dass der Magnet 43 vom Magnetfeldsensor 42 getrennt ist. In diesem Zustand erzeugt der Magnetfeldsensor 42 kein Sensorsignal. Gleichzeitig wird zwar immer noch der besagte, aber in dieser Darstellung nicht sichtbare, Druckdetektor 6 betätigt. Durch die logische Auswerteinheit 510 wird aber die elektrische Lastspannung mittels der Aktoreinheit 52 von den Kontakten des Gegensteckers getrennt.

Im Gegensatz dazu ist bei einem geschlossenen Verriegelungsbügel 3, wie er in der Fig. 1 und in der Fig. 2a gezeigt ist, die Steckverbindung verriegelt und gleichzeitig das Sensorsystem 4 betätigt. Somit wird von dem Sensorsystem 4 ein Sensorsignal erzeugt und über eine aus Übersichtlichkeitsgründen nicht mit einem Bezugszeichen versehenen Signalleitung vom Magnetfeldsensor 42 an die Trennvorrichtung 5, nämlich an die Steuereinheit 51 der Trennvorrichtung 5, übertragen werden. Gleichzeitig wird ein Detektorsignal vom Druckdetektor 6 über eine gestrichelt dargestellte Detektorleitung an die Steuereinheit übertragen. In der Logischen Auswerteinheit 510 werden beide Signale mit einer logischen "AND"-Verknüpfung ausgewertet. Die Steuereinheit 51 überträgt daraufhin ein Steuersignal an die Aktoreinheit 52. Die anforderungsgerecht konfigurierte Aktoreinheit 52 schaltet daraufhin die in eine Anschlussöffnung 25 des Anschlussgehäuses geführten Versorgungsleitungen L1-L3 eines ersten Kabels und damit die Last, d. h. die Lastspannung/Versorgungsspannung und damit im Betrieb den Laststrom/Versorgungsstrom durch.

Somit kann der Versorgungsstrom über entsprechende, nicht in der Zeichnung gezeigte Kontaktpaare übertragen werden. Die Kontaktpaare gehören zur Steckverbindung und bestehen aus steckverbinderseitigen Kontakten und damit gesteckten, d. h. mechanisch und elektrisch leitend verbundenen gegensteckverbinderseitigen Gegenkontakten. An die steckverbinderseitigen Kontakte kann kabelanschlussseitig ein weiteres Kabel mit entsprechenden weiteren Leitungen angeschlossen sein, um über das im gesteckten, verriegelten und freigeschalteten Zustand die elektrische Leistung in Richtung ihres Bestimmungsorts weiterzuführen. Für das Hinausführen des Kabels aus dem Steckverbindergehäuse 1 besitzt das Steckverbindergehäuse 1 einen Kabelauslass.

Da das Steckverbindergehäuse 1 vom Gegensteckverbindergehäuse/ Anbaugehäuse 2 bei geschlossenem Verriegelungsbügel 3 nicht trennbar ist, kann die Steckverbindung unter der anliegenden Last nicht getrennt werden. Sie kann dadurch insbesondere nicht so schnell getrennt werden, dass ein Lichtbogen entsteht. Im getrennten Zustand der Steckverbindung kann weiterhin keine Spannung an den Kontakten des Gegensteckers 2 anliegen, weil der Druckdetektor 6 im getrennten Zustand nicht betätigt ist, selbst wenn der Verriegelungsbügel (3) geschlossen und der Verriegelungssensor 4 dadurch betätigt ist.

Umgekehrt ist es auch leicht nachvollziehbar, dass eine getrennte Steckverbindung bei geschlossenem Verriegelungsbügel 3 auch nicht steckbar ist. Auch dadurch wird auch ein Stecken unter Last vermieden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Steckverbindergehäuse
- 13: Rastzapfen
- 15: Kabelauslass

- 2: Gegensteckverbindergehäuse/Anbaugehäuse
- 23: Lagerzapfen
- 25: Anschlussöffnung

- 3: Verriegelungsbügel

- 4: Sensorsystem
- 42: Sensor, Verriegelungssensor, Magnetfeldsensor
- 43: Magnet

- 5: Trennvorrichtung
- 51: Steuereinheit
- 510: logische Auswerteinheit
- 52: Aktoreinheit

- 6: Steckdetektor, Druckdetektor

- L1-L3: Versorgungsleitungen

## Patentansprüche

1. Vorrichtung zum lastfreien Trennen einer Steckverbindung, wobei die Vorrichtung zumindest eine elektrische Trennvorrichtung (5) und eine Verriegelungsvorrichtung (3) aufweist,
wobei die Verriegelungsvorrichtung (3) sowohl eine die Steckverbindung verriegelnde als auch in eine die Steckverbindung entriegelnde Stellung einnehmen kann,
wobei die Vorrichtung weiterhin einen Sensor (42) besitzt, der mit der Verriegelungsvorrichtung (3) zusammenwirkt, um die elektrische Trennvorrichtung (5) zu steuern, wodurch es sich bei dem Sensor um einen Verriegelungssensor (42) handelt,
wobei die Verriegelungseinrichtung (3) in ihrer verriegelnden Stellung sowohl ein Trennen als auch ein Verbinden der Steckverbindung verhindert,
wobei es sich bei der Verriegelungsvorrichtung um einen Verriegelungsbügel (3) handelt, der sowohl in die besagte verriegelnde, d. h. geschlossene, als auch in die besagte entriegelnde, d. h. geöffnete, Stellung schwenkbar ist,
wobei die Vorrichtung die Steckverbindung aufweist und dass die Steckverbindung einen Steckverbinder und einen Gegensteckverbinder aufweist, wobei der Steckverbinder ein Steckverbindergehäuse (1) mit Rastzapfen (13) aufweist und wobei der Gegensteckverbinder ein Gegensteckverbindergehäuse (2) mit Lagerzapfen (23) aufweist, an welchen der Verriegelungsbügel (3) schwenkbar gehalten ist, um in seiner die Steckverbindung verriegelnden Stellung die Rastzapfen (13) des Steckverbindergehäuses (1) zu umgreifen,
wobei die Vorrichtung weiterhin einen Steckdetektor (6) zur Feststellung eines Steckzustands der Steckverbindung aufweist, wobei der Steckdetektor (6) und der Verriegelungssensor (42) dazu konfiguriert sind, gemeinsam die elektrische Trennvorrichtung (5) zu steuern, wobei der Steckdetektor (6) einen Schalter oder einen Magnetfeldsensor oder eine sogenannte Radio Frequency Identification Device ("RFID") oder eine Kontaktbrücke im Isolierkörper des Steckverbinders aufweist oder als Druckdetektor ausgeführt ist,
**dadurch gekennzeichnet, dass** die Steckverbindung mehrere Kontaktpaare aufweist, welche aus steckverbinderseitigen Kontakten und zur Übertragung eines Versorgungsstroms/Laststroms damit gesteckten gegensteckverbinderseitigen Gegenkontakten bestehen, dass
die elektrische Trennvorrichtung (5) eine Steuereinheit (51) und eine Aktoreinheit (52) besitzt, und dass sowohl der Steckdetektor (6) als auch der Verriegelungssensor (42) ausgangsseitig an die Steuereinheit (51) angeschlossen sind, und dass die Steuereinheit (51) eine logische Auswerteinheit (510) besitzt, die dazu dient,
- entweder ein Stecksignal des Steckdetektors (6) bei gestecktem Steckverbinder und ein Verriegelungssignal des Verriegelungsdetektors (42) bei verriegelndem Verriegelungsbügel (3) miteinander zu verknüpfen, um die Aktoreinheit (52) so zum Übertragen eines Laststroms über die Kontaktpaare zu veranlassen,
- oder aber bei nicht gestecktem Steckverbinder und/oder nicht geschlossenem Verriegelungsbügel (3) die Aktoreinheit (52) zum Sperren des Laststroms über die Kontaktpaare zu veranlassen.

2. Vorrichtung gemäß Anspruch 1, wobei der Verriegelungssensor (42) einen magnetischen Sensor, einen Drucksensor, einen optische Sensor und/oder einen Taster oder Schalter besitzt.

3. Vorrichtung gemäß Anspruch 2, **dadurch gekennzeichnet, dass** das Gegensteckverbindergehäuse (2) als Anbaugehäuse ausgeführt ist.

4. Vorrichtung gemäß einem der Ansprüche 2 bis 3, **dadurch gekennzeichnet, dass** die elektrische Trennvorrichtung (5) in dem Gegensteckverbindergehäuse (2) angeordnet ist.

5. Vorrichtung nach Anspruch 3, **dadurch gekennzeichnet, dass** das Anbaugehäuse (2) an einem Schaltschrank oder einem Gehäuse eines elektrischen Gerätes angeordnet ist, und dass die elektrische Trennvorrichtung (5) in dem Schaltschrank oder in dem Gehäuse des elektrischen Gerätes angeordnet ist.

6. Verfahren zum lastfreien Trennen einer Steckverbindung, mittels einer Vorrichtung gemäß Anspruch 1, mit folgenden Schritten:
A.) Überführen eines Verriegelungselements (3) in seine geschlossene Position zur Verriegelung einer geschlossenen Steckverbindung, wobei es sich bei der Verriegelungselement um einen Verriegelungsbügel (3) handelt,
B.) Zusammenwirken des Verriegelungselements (3) mit einem Verriegelungssensor (42) und gleichzeitiges Zusammenwirken der geschlossenen Steckverbindung mit einem Steckdetektor (6), wobei der Steckdetektor (6) einen Schalter oder einen Magnetfeldsensor oder eine sogenannte Radio Frequency Identification Device ("RFID") oder eine Kontaktbrücke im Isolierkörper des Steckverbinders aufweist oder als Druckdetektor ausgeführt ist;
C.) Signalisieren des gesteckten Zustands der Steckverbindung und der geschlossenen Stellung des Verriegelungselements durch den Verriegelungssensor (42) und den Steckdetektor (6) an eine Steuereinheit (51) sowie logisches Verknüpfen dieser Informationen durch die Steuereinheit (51);
D.) Freischalten einer Last (Laststrom/Lastspannung) über mehrere Kontaktpaare, welche aus steckverbinderseitigen Kontakten und zgegensteckverbinderseitigen Gegenkontakten bestehen, durch eine von der Steuereinheit (51) gesteuerten Aktoreinheit (52);
E.) Entriegeln der Steckverbindung durch überführen des Verriegelungselements (3) von seiner verriegelnden in seine entriegelnde Stellung; dadurch automatisch
F.) Sperren der Last durch die Aktoreinheit (52);
G.) lastfreies Trennen der Steckverbindung.

7. Verfahren nach Anspruch 6, wobei der Verriegelungssensor (42) einen magnetischen Sensor, einen Drucksensor, einen optische Sensor und/oder einen Taster oder Schalter besitzt.

## Claims

1. Device for the load-free disconnection of a plug-in connection, wherein the device has at least one electrical disconnection device (5) and a locking device (3),
wherein the locking device (3) can assume a position locking the plug-in connection and also in a position unlocking the plug-in connection,
wherein the device further possesses a sensor (42) which cooperates with the locking device (3), in order to control the electrical disconnection device (5), whereby the sensor is a locking sensor (42),
wherein the locking mechanism (3) in its locked position prevents a disconnection and also a connection of the plug-in connection,
wherein the locking device is a locking clip (3) which can be pivoted into said locked, i.e. closed, position and also into said unlocked, i.e. open, position, wherein the device includes the plug-in connection and that the plug-in connection includes a plug connector and a mating plug connector, wherein the plug connector has a plug connector housing (1) with latching pins (13) and wherein the mating plug connector has a mating plug connector housing (2) with bearing pins (23) on which the locking clip (3) is pivotally held, in order to engage around the latching pins (13) of the plug connector housing (1) in its position locking the plug-in connection,
wherein the device further includes a plug-in detector (6) for determining a plug-in state of the plug-in connection, wherein the plug-in detector (6) and the locking sensor (42) are configured to control the electrical disconnection device (5) together, wherein the plug-in detector (6) has a switch or a magnetic field sensor or a so-called radio frequency identification device ("RFID") or a contact bridge in the insulating body of the plug connector or is designed as a pressure detector,
**characterized in that** the plug-in connection has a plurality of contact pairs which consist of contacts on the plug connector side and mating contacts on the mating plug connector side which are plugged therewith for transmitting a supply current/load current, that the electrical disconnection device (5) possesses a control unit (51) and an actuator unit (52), and that the plug-in detector (6) and also the locking sensor (42) are connected to the outside of the control unit (51), and that the control unit (51) possesses a logical evaluation unit (510) which is used
- to either link together a plug-in signal of the plug-in detector (6) when the plug connector is plugged in and a locking signal of the locking detector (42) when the locking clip (3) is locked, in order to thus cause the actuator unit (52) to transmit a load current via the contact pairs,
- or to cause the actuator unit (52) to block the load current via the contact pairs when the plug connector is not plugged in and/or the locking clip (3) is not closed.

2. Device according to Claim 1, wherein the locking sensor (42) possesses a magnetic sensor, a pressure sensor, an optical sensor and/or a button or switch.

3. Device according to Claim 2, **characterized in that** the mating plug connector housing (2) is designed as an attachment housing.

4. Device according to either of Claims 2 and 3, **characterized in that** the electrical disconnection device (5) is arranged in the mating plug connector housing (2).

5. Device according to Claim 3, **characterized in that** the attachment housing (2) is arranged at a switch cabinet or a housing of an electrical apparatus, and that the electrical disconnection device (5) is arranged in the switch cabinet or in the housing of the electrical apparatus.

6. Method for the load-free disconnection of a plug-in connection, by means of a device according to Claim 1, having the following steps:
A.) transferring a locking element (3) into its closed position for locking a closed plug-in connection, wherein the locking element is a locking clip (3),
B.) the locking element (3) cooperating with a locking sensor (42) and the closed plug-in connection simultaneously cooperating with a plug-in detector (6), wherein the plug-in detector (6) has a switch or a magnetic field sensor or a so-called radio frequency identification device ("RFID") or a contact bridge in the insulating body of the plug connector or is designed as a pressure detector;
C.) signalling the plugged state of the plug-in connection and the closed position of the locking element to a control unit (51) by way of the locking sensor (42) and the plug-in detector (6) as well as logically linking this information by way of the control unit (51);
D.) releasing a load (load current/load voltage) by way of an actuator unit (52) which is controlled by the control unit (51) via a plurality of contact pairs, which consist of contacts on the plug connector side and mating contacts on the mating plug connector side;
E.) unlocking the plug-in connection by transferring the locking element (3) from its locked position into its unlocked position; therefore automatically
F.) blocking the load by way of the actuator unit (52);
G.) disconnecting the plug-in connection in a load-free manner.

7. Method according to Claim 6, wherein the locking sensor (42) possesses a magnetic sensor, a pressure sensor, an optical sensor and/or a button or switch.

## Revendications

1. Dispositif pour déconnecter sans charge une connexion enfichable, le dispositif possédant au moins un dispositif de déconnexion électrique (5) et un dispositif de verrouillage (3),
le dispositif de verrouillage (3) pouvant adopter à la fois une position verrouillant la connexion enfichable et dans une position déverrouillant la connexion enfichable,
le dispositif possédant en outre un capteur (42) qui coopère avec le dispositif de verrouillage (3) pour commander le dispositif de déconnexion électrique (5), le capteur étant ainsi un capteur de verrouillage (42), l'appareil de verrouillage (3), dans sa position de verrouillage, empêchant à la fois la déconnexion et la connexion de la connexion enfichable,
le dispositif de verrouillage étant un étrier de verrouillage (3) qui peut pivoter aussi bien dans ladite position de verrouillage, c'est-à-dire fermée, que dans ladite position de déverrouillage, c'est-à-dire ouverte, le dispositif possédant la connexion enfichable et la connexion enfichable possédant un connecteur enfichable et un connecteur enfichable homologue, le connecteur enfichable possédant un boîtier de connecteur enfichable (1) avec des ergots d'encliquetage (13) et le connecteur enfichable homologue possédant un boîtier de connecteur enfichable homologue (2) avec des tourillons (23) au niveau desquels l'étrier de verrouillage (3) est maintenu de manière pivotante afin d'enserrer, dans sa position de verrouillage de la connexion enfichable, les ergots d'encliquetage (13) du boîtier de connecteur enfichable (1),
le dispositif possédant en outre un détecteur d'enfichage (6) destiné à constater un état d'enfichage de la connexion enfichable, le détecteur d'enfichage (6) et le capteur de verrouillage (42) étant configurés pour commander conjointement le dispositif de déconnexion électrique (5), le détecteur d'enfichage (6) possédant un commutateur ou un capteur de champ magnétique ou un dispositif dit d'identification par radiofréquence (« RFID ») ou un pont de contact dans le corps isolant du connecteur enfichable ou étant réalisé sous la forme d'un détecteur de pression,
**caractérisé en ce que** la connexion enfichable possède plusieurs paires de contacts, lesquels sont constitués de contacts côté connecteur enfichable et de contacts homologues côté connecteur homologue enfichés avec ceux-ci pour transmettre un courant d'alimentation / courant de charge, **en ce que** le dispositif de déconnexion électrique (5) possède une unité de commande (51) et une unité d'actionnement (52), et **en ce que** le détecteur d'enfichage (6) ainsi le capteur de verrouillage (42) sont tous deux raccordés côté sortie à l'unité de commande (51), et **en ce que** l'unité de commande (51) possède une unité d'évaluation logique (510) qui sert à
- soit combiner entre eux un signal d'enfichage du détecteur d'enfichage (6) lorsque le connecteur enfichable est enfiché et un signal de verrouillage du détecteur de verrouillage (42) lorsque l'étrier de verrouillage (3) est verrouillé, afin d'amener ainsi l'unité d'actionnement (52) à transmettre un courant de charge par le biais des paires de contacts,
- ou alors, lorsque le connecteur enfichable n'est pas enfiché et/ou que l'étrier de verrouillage (3) n'est pas fermé, amener l'unité d'actionnement (52) à bloquer le courant de charge par le biais des paires de contacts.

2. Dispositif selon la revendication 1, le capteur de verrouillage (42) possédant un capteur magnétique, un capteur de pression, un capteur optique et/ou un bouton-poussoir ou un commutateur.

3. Dispositif selon la revendication 2, **caractérisé en ce que** le boîtier de connecteur enfichable homologue (2) est réalisé sous la forme d'un boîtier rapporté.

4. Dispositif selon l'une des revendications 2 à 3, **caractérisé en ce que** le dispositif de déconnexion électrique (5) est disposé dans le boîtier de connecteur enfichable homologue (2).

5. Dispositif selon la revendication 3, **caractérisé en ce que** le boîtier rapporté (2) est disposé au niveau d'une armoire électrique ou d'un boîtier d'un appareil électrique, et **en ce que** le dispositif de déconnexion électrique (5) est disposé dans l'armoire électrique ou dans le boîtier de l'appareil électrique.

6. Procédé pour déconnecter sans charge une connexion enfichable, au moyen d'un dispositif selon la revendication 1, comprenant les étapes suivantes :
A.) transfert d'un élément de verrouillage (3) dans sa position fermée afin de verrouiller une connexion enfichable fermée, l'élément de verrouillage étant un étrier de verrouillage (3),
B.) coopération de l'élément de verrouillage (3) avec un capteur de verrouillage (42) et coopération simultanée de la connexion enfichable fermée avec un détecteur d'enfichage (6), le détecteur d'enfichage (6) possédant un commutateur ou un capteur de champ magnétique ou un dispositif dit d'identification par radiofréquence (« RFID ») ou un pont de contact dans le corps isolant du connecteur enfichable ou étant réalisé sous la forme d'un détecteur de pression ;
C.) signalisation de l'état enfiché de la connexion enfichable et de la position fermée de l'élément de verrouillage par le capteur de verrouillage (42) et le détecteur d'enfichage (6) à une unité de commande (51) et combinaison logique de ces informations par l'unité de commande (51) ;
D.) déconnexion d'une charge (courant de charge / tension de charge) par le biais de plusieurs paires de contacts, lesquelles sont composées de contacts côté connecteur enfichable et de contacts homologues côté connecteur enfichable homologue, par une unité d'actionnement (52) commandée par l'unité de commande (51) ;
E.) déverrouillage de la connexion enfichable par transfert de l'élément de verrouillage (3) de sa position de verrouillage à sa position de déverrouillage ; et ainsi automatiquement
F.) blocage de la charge par l'unité d'actionnement (52) ;
G.) déconnexion hors charge de la connexion enfichable.

7. Procédé selon la revendication 6, le capteur de verrouillage (42) possédant un capteur magnétique, un capteur de pression, un capteur optique et/ou un bouton-poussoir ou un commutateur.
